# EUROPEAN PATENT APPLICATION

(11) **EP 1 491 915 A1**
(43) Date of publication of application: **29.12.2004**
(21) Application number: 03014210.3
(22) Date of filing: 25.06.2003
(51) Int. Cl.: G01T 1/29, G01V 5/00, G01T 1/164

(54) **Method and system for gamma ray positron imaging**

(71) Applicant: GFE mbH, Gesellschaft für Forschungs- und Entwicklungsservice mbH, 63128 Dietzenbach (DE)
(72) Inventor: Gerl, Jürgen, Dr., 63128 Dietzenbach (DE)

(57) **Abstract**

A gamma ray imaging method and system for non-destructive and non-invasive determination of amount and distribution of matter in objects. A point-like positron source (10) is placed in front of the object (40) to be examined. A position detector (20) behind the source measuring 511 keV gamma rays from positron annihilation determines the direction of the correlated 511 keV gamma rays used to probe the object. Detecting the probing gamma ray after transmission through or scattering off the object in time coincidence to the position determining gamma ray (30) enables to map the thickness and density distribution of the object. The method and system is preferably used for security inspection of concealed items, control of erosion, deposition and structural defects, and the detection of land mines.

## Description

### Field of the invention

The present invention relates to a method and apparatus employing positron annihilation radiation for non-destructive and non-invasive determination of amount, composition and distribution of matter of an object.

### Background

The observation of matter hidden from direct view is frequently required. One area is security inspection for items concealed within various different objects. Explosives in luggage at airports, weapons in bags in public buildings or drugs in car tires at customs points are examples. Another area is non-destructive and non-invasive inspection of commercial products. Level gauging of fluids or solid substances in containers belongs to this category as well as void inspection within structural materials or the control of erosion or depositions in tubes. Yet another area is detection of land mines in soil.

There are various inspection techniques relying e.g. on ultrasonics, microwaves, eddy currents, electrical and magnetic fields. However, they all are limited to particular materials and often require special surface characteristics. In addition with some methods the scan area and penetration depth is quite small. Being highly suitable for certain specific applications none of these techniques has the capability and flexibility to be used as a general tool for non-destructive and non-invasive determination of amount and distribution of matter in bodies.

Of widespread and rather general use are X-ray and gamma ray absorption techniques. They require accessibility of the object to be measured from two sides in order that the penetrating radiation may enter from one side and be detected on the other side. Gamma-ray imaging is often achieved by collimating the gamma radiation to a pencil-like or fan-like beam and by scanning the object with this beam. For scanning the beam direction is varied or/and the object is moved by mechanical means.

Methods based on radiation backscattering, mostly Compton scattering, are applicable when the object to be examined is accessible from one side only. There are portable backscatter devices available displaying a count rate or an audio signal in response to detected backscatter radiation. However, these devices have no imaging capabilities. Backscatter imaging systems require either a collimated radiation beam to move over the object or the object to move with respect to the beam.

Both with absorption and backscatter techniques the collimation of the employed gamma radiation beam and its scanning movement is crucial with respect to weight, size and mechanical complexity of any apparatus. Fan-like or pencil-like beam geometry is achieved by means of suitably shaped channel in a dense and heavy absorbing material like lead or tungsten alloys. Good image resolution generally requires small beam profile, thus the usable fraction of radiation emitted by the gamma source is often very small in the range of 0.001 to 1 percent. Since an image usually includes a multitude of scanned positions, high source activity is required to obtain the necessary radiation dose at each scanning position in a short time span. Otherwise the total time to generate an image would be impracticably long.

The potential danger of high source activities and the thick and heavy radiation shielding needed to protect the users and the environment is a disadvantage of these imaging techniques. Another disadvantage is the complex mechanics required to move the beam precisely across the scanning area. Weight, size and power consumption do generally not allow for a portable apparatus, which substantially limits the application of gamma ray imaging techniques.

As such, there is a need for a gamma-ray imaging apparatus, which may be employed in the non-destructive and non-invasive inspection of amount and distribution of matter in bodies, and which avoids the above mentioned restrictions of contemporary gamma-ray absorption and scatter techniques.

### Brief statement of invention

The present invention describes a new gamma ray imaging method and apparatus for non-destructive and non-invasive in-situ determination of amount and distribution of matter in bodies, unique from the previous methods mentioned above. Contrary to prior art the present invention avoids collimating the gamma-rays from a gamma source to a beam by an absorbing collimator.

This is possible by employing 511 keV annihilation-gamma rays from a point-like positron emission source to irradiate an object and detecting the coincident 511 keV gamma rays in a so called Position detector. To be applicable the source needs to be positioned between the object to be probed and the Position detector. Due to the 180° emission angle correlation of the two 511 keV gamma rays from positron annihilation the interaction position of one gamma ray in said detector directly relates to the impact position and direction of the other gamma ray which probes the object. Size and cross sectional shape of the Position detector therefore determine the profile of the actually employed gamma-ray beam. The solid angle covered by the Position detector can be as large as 50% of the full solid angle.

Measuring either the non absorbed gamma rays behind the object or those scattered off the object by another gamma detector in time coincidence with the Position detector is thus equivalent to prior art apparatus with conventional collimator. Using an array of Position detector elements, or more generally a position sensitive gamma-ray detector, enables to probe a corresponding field of positions on the object at once. Due to the multitude of simultaneously probed positions the source activity can be strongly reduced without compromising the time to produce an image.

Size and weight of the source shielding can be minimized accordingly, resulting in a compact and light apparatus possibly avoiding any scanning mechanics.

An imaging system of the present invention comprises a) at least one source of positron annihilation gamma rays to be placed in front of the object to be inspected; b) at least one Position detector element to detect annihilation gamma ray correlated with gamma ray hitting the object, which detector is to be placed behind the 511 keV annihilation gamma ray source in such a way as to define the imaging field; c) at least one gamma detector placed such that it may detect gamma rays transmitted through or scattered off the object in time coincidence with any said Position detector element, d) signal and data processing means to generate from the detector signals position dependent coincidence rate information preferably discriminating background events; e) preferably means to generate visual images.

These; as well as other advantages of the present invention will be evident and more clearly understood from the following description and drawings. It is understood that changes in the specific structure shown and described may be made within the scope of the claims without departing from the spirit of the invention.

### Brief description of the drawings

FIG 1 shows a schematic drawing of the measurement principle.
FIG 2 shows a block diagram of the signal and data processing means.
FIG 3 shows a schematic drawing of a transmission imaging apparatus employing a position sensitive line detector as Position detector.
FIG 4 shows a schematic drawing of a backscatter imaging apparatus employing a position sensitive area detector as Position detector.

### Description of the invention

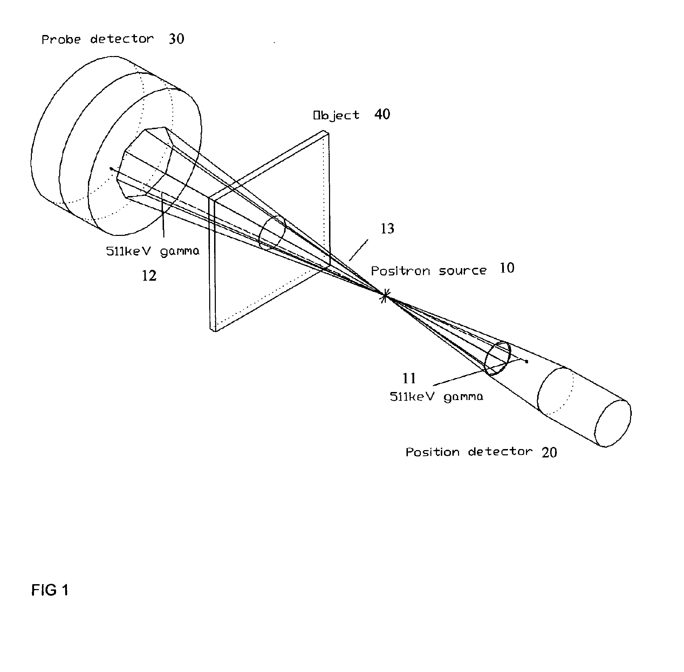

FIG 1 illustrates the principle of the present invention. The point-like positron source 10 emits pairs of 511 keV positron annihilation gamma rays 11, 12 directed 180° to each other. One gamma ray 11 may be registered in the so called Position gamma detector 20. The active detection area of this detector defines the beam shape 13 of the correlated 511 keV gamma rays meant to probe the object 40 to be examined. In the example shown in FIG 1 the probing gamma ray 12 is used for an absorption type measurement. The Probe gamma detector 30 detects gamma rays transmitting the object 40. The transmission probability depends on amount, density and element composition of the object. To distinguish between gamma rays belonging to the probing beam and other gamma rays emitted by the source 10 or by other natural or artificial radiation sources, time coincidence of the signals of both detectors is demanded.

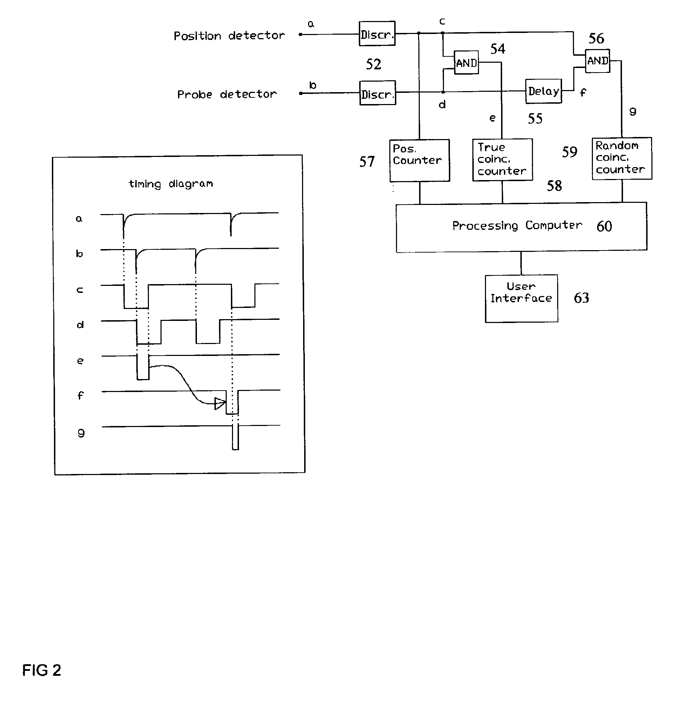

Preferably the detectors are scintillators coupled to photomultiplier tubes or avalanche diodes to generate an electrical signal in response to the light produced by a gamma-ray interacting with the scintillator. Likewise solid state gamma detectors producing an electrical signal can be employed. To determine the time relation of signals of the two detectors conventional coincidence electronics circuitry as shown in FIG 2 may be used. The time information is obtained by discriminator units 52 generating logic signals. If a signal from the Position detector overlaps with the signal of the Probe detector a coincidence signal appears at the output of an AND gate 54.

Preferably the widths of the logic signals shall be as wide as the expected time jitter of the detectors to obtain a coincidence signal for most of the correlated events.
On the other hand signal width should not be wider than necessary to avoid chance coincidences of uncorrelated gamma rays.

Absorption measurement is established by counting the coincidence signals 58 and the signals of the Position detector 57 for a certain time interval. After correcting for the efficiency of the Probe detector and for chance coincidence contribution 59 the ratio of coincidence rate and Position detector rate reveals the transmission probability. The chance coincidence rate can be determined by delaying 55 one detector signal by at least the time corresponding to the width of this signal and putting it to another AND gate56 together with the signal of the other channel. Counting is performed electronically and the obtained rates are preferably processed in a computer 60 with a user interface 63 with a display to show the calculated transmission probability.

Generally, gamma detectors with fast response and, hence, small time jitter like plastic, BaF or LSO are preferable for applications dealing with high source activity or strong background radiation. In that case a preferable embodiment of the present invention comprises a time to amplitude converter (TAC) and two window discriminators to get accurate coincidence and chance coincidence information. Alternatively the time signals can be digitised in a time to digital converter (TDC) enabling a data processing computer to extract the relevant rates from the accumulated spectrum.

In the following three examples are presented for preferred embodiments of the present invention highlighting advantages to prior art.

### Transmission-type tube thickness monitoring

One application for the invention is the inspection of wall thickness of tubes. In a preferred embodiment of the invention a conically shaped 10 cm long plastic scintillator with 1.5 mm front diameter and 10 mm back diameter is employed as Position detector. Light readout is achieved by a small photomultiplier tube attached to the back side. The Position detector in this embodiment defines an opening cone of about 5° for the probing gamma beam. A ²²Na source of only 1 MBq activity is placed 2 cm in front of the Position detector. The detector source unit is fixed to a ring-like mechanical structure surrounding the tube to be inspected in a way to enable the unit to move on the ring around the tube. On the opposite side of the tube the Transmission detector is mounted so that it moves together with source and Position detector around the tube. The Transmission detector in this example consists of a plastic scintillator of 8 cm diameter and 10 cm length read out by a 76 mm diameter photomultiplier. Movement of the detectors and the source in this embodiment is achieved by a computer controlled electrical motor. Motor driven wheels attached to the ring structure enable automated movement of the apparatus along the tube.

Using signal and data processing electronics as described before, the coincidence rate normalized to the singles rate of the Position detector directly relates to the transmission probability and, hence, to the thickness of the wall. The transmission data together with the position information from the motor control system allow image construction of the tube's thickness distribution by means of standard computer programs.

In prior art apparatus background radiation interacting with the Transmission detector is hardly distinguishable from interactions of gamma rays from the source transmitting the tube. Therefore the count rate of transmission gammas must be much higher than the background rate to avoid inaccuracies in the thickness determination. Alternatively an additional detector is required to measure the background rate to be able to correct for it or the Transmission detector must be heavily shielded. The present invention avoids this disadvantage since the time coincidence with the Position detector strongly suppresses any background radiation interacting with the Transmission detector. Therefore the total number of transmitted gamma rays required to determine the tube thickness is given by the demanded statistical accuracy only. This enables to reduce the source activity to a level safe for operators and environment without extensive radiation protection measures.

### Transmission-type luggage inspection

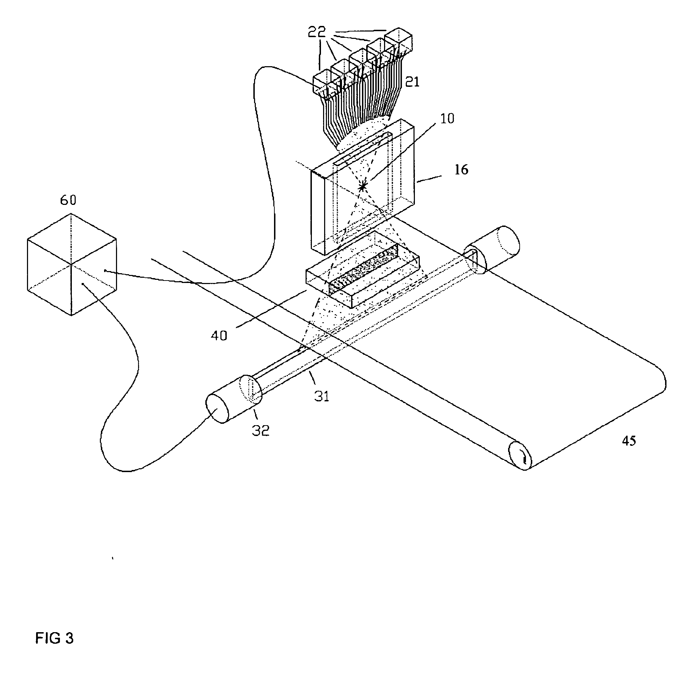

Another advantageous application for the present invention is the inspection of luggage transported on a conveyor belt. In the following a preferred embodiment for such apparatus is presented (see FIG 3). The Position detector in this embodiment consists of an assembly of 512 scintillating plastic fibers of 1 x 1 x 100 mm³ size arranged in two fan like plane 21 layers subtending an angular range of 60°. One 256-fiber layer is shifted by about 0.23° with respect to the other one. The outer fiber ends are preferably connected to multi-anode photomultipliers 22. Gamma detection with scintillating fibers is a technique described e.g. in P.V. Kulkarni et al.: *New approaches in medical imaging using plastic scintillating detectors,* Nucl. Instr. Meth. B79 (1993) 921. The fibers with their inner ends are all directed towards a point at 245 mm distance where a point-like ²²Na source 10 with 10 MBq activity is placed. This geometrical arrangement as indicated in FIG 3 defines a fan like 511 keV gamma ray beam in opposite direction to the fibers detecting the associated 511 keV annihilation gamma rays from the source. To absorb gamma rays emitted into other directions the source is mounted in a lead block 16 with appropriate opening slits.

The gamma ray fan radiates preferably from above perpendicular towards a conveyor belt 45, and transverse to the transport direction of the belt, establishing a two-dimensional imaging plane for objects 40 transported on the belt. In a preferred embodiment gamma rays transmitting the object and the belt are detected by a plastic scintillator slab 31 of 10 x 76 x 1000 mm³ placed below the belt at a distance and direction covering the full range of the beam fan. This Transmission detector is read out by photomultipliers 32 on both ends.

In this embodiment of the invention pulse discriminators are employed to generate logic signals from each of the 512 anode signals of the photomultipliers of the Position detector and from the two Transmission detector signals. The Position detector signals are incremented in a scaler bank for reference. Another scaler bank is used to increment the signals if they are in time coincidence with the logical And connective of the transmission signals. The scalers are read out by a data acquisition computer 60 which controls the scaler accumulation and the conveyor movement. Each accumulation and read-out sequence produces one image line. Possible efficiency differences are corrected for by normalizing channel by channel the coincidence data by the singles data. The normalized data directly relate to the transmission probability and , hence, the matter distribution. The absorption in the conveyor belt can in first order be accounted for by multiplying the data by experimentally determined position dependent correction factors. Finally, the image is constructed line by line in correlation with the movement of the conveyor belt. Random coincidences are negligible due to the short coincidence overlap time of <20 ns possible with this system. Coincidences between a 1275 keV gamma ray and a 511 keV gamma ray or any gamma ray scattering between Position and Transmission detector are also negligible because of the small relevant solid angles.

Contemporary luggage inspection systems often employ a moving beam of X rays or gamma rays shaped by a collimator in a way to form a narrow beam spot on the object to be inspected. Scanning with this beam a line transverse to the direction of a conveyor belt transporting the object and detecting transmitted rays by means of a radiation detector allows to produce an image of the matter distribution of the object. Compared to these systems the present invention avoids the mechanics to move the beam and requires orders of magnitude lower source activities. Another widely applied contemporary method uses a fan-shaped X-ray or gamma-ray beam together with a large position sensitive transmission detector eventually covering the whole scanning line. Compared to this method the present invention avoids a position sensitive transmission detector and takes advantage of the much more compact position sensitive Position detector. Moreover, background radiation deteriorating the image quality in prior art apparatus is highly suppressed in the present invention.

### Backscatter-type concealed item inspection

For imaging purposes the embodiment of the invention discussed so far requires the object to be examined to move with respect to the source and detector set-up or the set-up to move with respect to the object. For applications where this is not wanted it is preferable to employ an array of Position detectors or a position sensitive Position detector defining the field of positions to be depicted in the image.

Many kinds of two-dimensional position sensitive gamma detectors as have been developed for medical or industrial imaging applications are suitable.

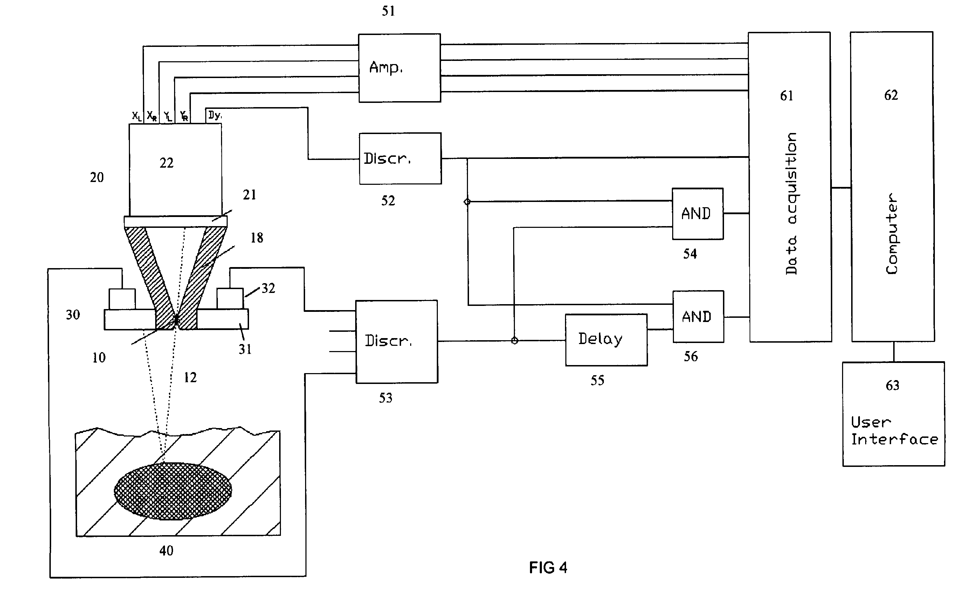

In a preferred embodiment of the invention sketched in FIG 4 a monolithic BGO scintillator 21 with 7mm thickness and 65 mm diameter coupled to a position sensitive photomultiplier 22 equipped with an orthogonal x,y grid anode is employed. Read-out of the anode signals may be performed by resistor chains, and subsequent electronics circuitry may serve to obtain signal amplitudes proportional to x and y position by generating conventional difference over sum signals.

In the example the last dynode signal of the PMT is fed into a discriminator 52 to generate a fast timing and trigger signal. Whenever this trigger signal appears the corresponding analogue position signals are digitized by analogue to digital converters (ADC) and read-out by a computer 62 controlled data acquisition system 61. In addition logic signals indicating prompt 54 and delayed 56 time coincidence with the probe detector 30 are taken event by event.

The probe detector 30 in this example is an annular gamma Backscatter detector 31 with ca. 25 mm inner diameter and ca. 75 mm outer diameter consisting of a Csl scintillator with photomultiplier read-out 32. In this embodiment of the invention a ²²Na source 10 is employed. If a 511 keV gamma ray is detected at a certain position of the Position detector 20 in FIG 4 its 180° counterpart 12 may be scattered off an object 40 in front of the set-up. For a given range of scattering angles this scattered gamma ray may be detected in the Backscatter detector and may generate a coincidence trigger. An image of the matter distribution in the field of view -defined by the active area of the Position detector and the source to matter distance- is obtained by incrementing an image data array in the data acquisition computer.
For each coincidence event the content of the element of the array corresponding to the detected x, y position is incremented.

The image quality depends on the statistical accuracy, i.e. the number of coincident backscatter events accumulated within the measurement time. It depends further on background events from chance coincidences of uncorrelated gamma rays. This can be corrected for by subtracting a chance coincidence image obtained by incrementing delayed coincidence data.

Another background source is correlations between one 511 keV gamma ray and one 1275 keV gamma ray. The latter is associated to the ²²Na decay, but shows no angular correlation with the 511 keV annihilation radiation. Therefore events where a 1275 keV gamma ray is detected in the Position detector, or is detected in the Backscatter detector after scattering off matter contain no useful position information. Instead they add to non structured background in the image, which may be suppressed by image processing. Any gamma ray from the ²²Na source directly reaching the Backscatter detector may interact and scatter into the Position detector. Such event is hardly distinguishable from correlated 511 keV backscattering off objects. Therefore adequate radiation shielding between the ²²Na source and the backscatter detector is useful. Similarly gamma rays scattered off the Position detector need to be shielded to not reach the Backscatter detector.

The singles data from the Position detector reveal possible efficiency differences within the active detection area. Moreover, they may serve to normalize the coincidence image with respect to the backscatter probability.

The image resolution is mainly determined by the position resolution of the Position detector. Any resolvable area on the Position detector defines an irradiation cross section on the object. If the distance between the Position detector and the source dp is equal to the distance between the source and the object do, the imaging area at the object equals the active size of the Position detector. Magnification M of the imaged object is obtained according to M = dₚ/dₒ if the distance to the object is shorter. For longer distance the imaged area gets larger. The possible image resolution, particularly at very short distance, is in addition affected by the finite size of the ²²Na source, respectively the range of the positrons in the source matter before annihilation. For the described apparatus the effective source diameter is below 1.5 mm, resulting in an image pixel resolution of about 2.5 mm FWHM for two-fold magnified images.

Due to the compact and light set-up possible with the present invention, a portable backscatter imaging device is possible. Many kinds of items hidden from direct view like contraband in car bodies or corrosion holes in tubes become easily detectable with such imaging device.

## Claims

1. A method of detecting the amount and distribution of matter in objects using gamma radiation from positron decay, said method comprising the steps of:
a) detecting the direction and time of occurrence of 511 keV annihilation gamma ray emitted from a point-like positron source, thereby determining the direction of the associated 511 keV gamma ray emitted from the source into opposite direction,
b) detecting the time of occurrence of gamma ray from said positron source transmitted through or scattered off an object placed in front of the source,
c) measuring the time difference between said gamma ray from the source and said gamma ray presumably being transmitted through or scattered off an object, thereby selecting correlated gamma ray pairs by proper time difference,
d) analysing the direction dependence of the correlated gamma transmission or scattering events, correcting for efficiency and possibly subtracting chance coincidences and background contributions from additional gamma rays possibly emitted from the source,
e) determining from the direction dependent rate of correlated transmission or scattering events the direction dependent transmission or scattering probability,
f) processing the said direction dependent probability information to obtain an image mapping the transmission or scattering probability for a range of positions of the object corresponding to the direction of 511 keV gamma rays hitting this range.

2. The method of claim 1, further comprising selecting chance coincidence events by time differences corresponding to delay between the time of occurrence of gamma ray from the positron source and another gamma ray from the source presumably being transmitted through or scattered off an object,

3. The method of claim 1, further comprising measuring the energy of detected gamma rays and selecting correlated gamma rays by proper energy values.

4. The method of claim 1, further comprising the calculation and image presentation of the thickness or density distribution from said transmission or scattering probabilities possibly employing reference image values.

5. The method of claim 1, further comprising image processing methods to enhance the visibility of inherent structure of the object, e.g. material defects or arrangements of different kinds of objects.

6. A system for carrying out the method of claim 1-5 comprising:
a) At least one source of positron annihilation gamma rays to be placed in front of the object to be inspected,
b) at least one first gamma detector to detect 511 keV gamma ray from gamma ray pair emitted with positron annihilation of said source. Which detector is to be placed behind said gamma ray source in such a way that a straight line from the detector to a position to be inspected on the object crosses said at least one source,
c) at least one second gamma detector placed such that it detects presumed 511 keV gamma ray from said source transmitted through or scattered off said object,
d) Signal processing means to generate from the signals of said detectors count rate information for each detector, coincidence time information for any of the at least one first detector and the at least one second detector, coincidence count rate information for any of the at least one first detector and the at least one second detector, random coincidence count rate information for any of the at least one first detector and the at least one second detector;
e) Data processing means to generate and display coincidence rate information after correcting for a background contribution of the at least one first detector and the at least one second detector.

7. The system of claim 6, wherein the source of positron annihilation gamma rays is a radio nuclide.

8. The system of claim 6, wherein the source of positron annihilation gamma rays is positrons produced by employing a particle accelerator.

9. The system of claim 6, comprising at least one position sensitive gamma ray detector with an effective detection area determining the cross-sectional shape of the gamma ray cone used to inspect the object.

10. The system of claim 6, comprising at least two gamma ray detectors forming the elements of an array with effective detection areas determining the cross-sectional shapes of the gamma ray cones used to inspect the object.

11. The system of claim 6, comprising at least one position sensitive gamma ray detector with an effective detection area determining the total cross-sectional shape of the gamma ray cone used to inspect the object.

12. The system of claim 6, wherein the at least one second gamma detector is placed behind an object to detect gamma rays transmitted through the object and the effective detection area covers at least the total opening cone of the 511 keV gamma rays as determined by said at least one first gamma detector.

13. The system of claim 6, wherein the at least one second gamma detector is placed sideways or in front of an object to detect gamma rays from said at least one source scattered off the object.

14. The system of claim 10, further comprising signal processing means to generate position information from the array of first gamma detectors, and means to generate position dependent coincidence count rate information corrected for chance coincidences.

15. The system of claim 11, further comprising signal processing means to generate position information from the at least one position sensitive first gamma ray detector, and means to generate position dependent coincidence count rate information corrected for chance coincidences.

16. The system of claim 14-15, further comprising data processing means to generate position dependent coincidence rate information after correcting for background contributions, and means to display this information as image.

17. The use of the system of claim 6-16, wherein the object is a material or a composite of materials and the system is used to detect erosion, corrosion or deposition.

18. The use of the system of claim 6-16, wherein the object contains items and the system is used to detect these items.

19. The use of the system as claimed in 18, wherein the object is any kind of luggage or bag and the items to be detected are explosives or weapons.

20. The use of the system as claimed in 18, wherein the object is soil and the items to be detected are land mines, archaeological artefacts or fossil remnants.
